# EUROPÄISCHE PATENTANMELDUNG

(11) **EP 1 741 683 A2**
(43) Veröffentlichungstag der Anmeldung: **10.01.2007**
(21) Anmeldenummer: 06014277.5
(22) Anmeldetag: 10.07.2006
(51) Int. Cl.: C04B 28/08, C04B 18/14, C04B 7/52

(54) **Rohstoffgemisch zur Herstellung eines Zementklinkers, Zementklinker und Zement**

(30) Priorität: 08.07.2005 EP 05014896
(71) Anmelder: Kehrmann, Alexander, 46509 Xanten (DE)
(72) Erfinder: Kehrmann, Alexander, 46509 Xanten (DE)
(74) Vertreter: HOFFMANN EITLE

(57) **Zusammenfassung**

Ein Hauptbestandteil von Zement ist Zementklinker, der aus einem Rohstoffgemisch, welches Calciumoxid, Siliziumdioxide, Aluminiumoxid und Eisenoxid enthält, durch Mischen, Mahlen und Brennen hergestellt wird. Erfindungsgemäß umfaßt das Rohstoffgemisch eine Kalkkomponente und Konverterschlacke und/oder Elektrostahlwerkschlacke. Hierdurch können sowohl natürliche Rohstoffressourcen geschont als auch der Kohlendioxidausstoß beim Brennen des Zementklinkers verringert werden.

## Beschreibung

Die Erfindung betrifft ein Rohstoffgemisch zur Herstellung eines Zementklinkers, ein Verfahren zur Herstellung von Zementklinker sowie Zementklinker und Zement.

Zement ist ein feingemahlenes hydraulisches Bindemittel, das bei Zugabe von Wasser erhärtet. Zement wird vor allem zur Herstellung von Betonmörtel, Betonsteinen oder Fertigteilen verwendet. Zement besteht im Wesentlichen aus Verbindungen von Calciumoxid mit Siliziumdioxid, Aluminiumoxid und Eisenoxid, die durch Sintern entstanden sind.

Hauptbestandteile des Zements sind Zementklinker und gegebenenfalls Hüttensand bzw. Trass. Nebenbestandteil ist unter anderem das in Form von Gipsstein oder Anhydrid zur Regelung des Erstarrens zugesetzte Calciumsulfat.

Zementklinker wird aus einem Rohstoffgemisch hergestellt, das hauptsächlich Calciumoxid CaO, Siliziumdioxid SiO₂, Aluminiumoxid Al₂O₃ und Eisenoxid Fe₂O₃ in bestimmten Anteilen enthält. Beim Erhitzen dieses Gemisches auf Temperaturen bis ca. 1450°C bilden sich durch Sinterung neue Verbindungen, die sogenannten Klinkerphasen.

Als Ausgangsmaterial zur Herstellung von Zementklinker wird neben Kalksteinmergel Kalkstein, Ton und Sand verwendet. Diese Ausgangsmaterialien werden in der Regel als natürliche Rohstoffe durch Abbau in Steinbrüchen gewonnen. Die Ausgangsmaterialien werden selten in der gewünschten Zusammensetzung in nur einem Rohstoff gefunden. Deshalb muss meistens ein Gemisch einer kalkreichen Komponente (Kalkkomponente) mit einer kalkärmeren, jedoch mehr Kieselsäure, Tonerde und Eisenoxid enthaltenden Komponente (Tonkomponente) hergestellt werden.

Bei der Herstellung von Zementklinker wird infolge der Umwandlung von Calciumcarbonat CaC03 in Calciumoxid CaO beim Brennvorgang Kohlendioxid CO2 freigesetzt, das bekanntermaßen nachteilige Umwelteinflüsse mit sich bringt. Diese Emission ist aufgrund des Rohmaterials Kalkstein prozessbedingt unvermeidbar und erreicht ein Volumen von ca. 21 Millionen Tonnen pro Jahr allein in Deutschland.

Nachteilig an der Herstellung von Zement ist somit, dass in großen Mengen natürlich vorkommende Rohstoffe verbraucht werden und dass durch den Herstellungsprozess in erheblichem Umfang CO₂ freigesetzt wird.

In der EP 0 572 076 A2 wird einem Rohstoffgemisch für einen Portlandzement Stahlschlacke in Pulverform bis zu einem Anteil von 25 % der Hochofenschlacke im Portlandzement zugegeben. Die Korngröße der Stahlschlacke beträgt ca. 0,09 mm.

Durch die RU 2 207 994 Cl ist ein Rohstoffgemisch zur Herstellung eines Portlandzementklinkers bekannt, das Carbonat, Hochofenschlacke, Aluminiumsilikat und Stahlschlacke enthält, wobei Stahlschlacke in einen Anteil von 5 % bis 8 % zugemischt ist.

Der Erfindung liegt ausgehend vom Stand der Technik die Aufgabe zugrunde, ein Rohstoffgemisch für einen Zementklinker, einen Zementklinker und einen Zement aufzuzeigen, welche unter Schonung natürlicher Rohstoffressourcen und unter Verringerung von Kohlendioxidemissionen hergestellt sind.

Die Lösung des das Rohstoffgemisch betreffenden Teils der Aufgabe besteht nach Patentanspruch 1 darin, dass die Rohstoffgemisch eine Kalkkomponente und Konverterschlacke und/oder Elektrostahlwerkschlacke umfaßt.

Konverterschlacke, insbesondere LD-Konverterschlacke, fällt als Abfallstoff bei der Stahlerzeugung an. Das Linz-Donawitz-Verfahren (LD-Verfahren) ist ein Sauerstoffblasverfahren zum Frischen, also zur Stahlherstellung durch Umwandlung von kohlenstoffreichem Roheisen in kohlenstoffarmen Stahl.

Konverterschlacke enthält alle für die Zementherstellung wichtigen Bestandteile, nämlich Calciumoxid CaO (typischerweise 25 bis 60 Gew.%, z.B. 49 Gew.%), Siliziumdioxid SiO2 (typischerweise 5 bis 20 Gew.%, z.B. 10 Gew.%), Aluminiumoxid A12O3 (typischerweise 1 bis 10 Gew.%, z.B. 2,5 Gew.%) und Eisenoxid Fe2O3 (typischerweise 10 bis 25 Gew.%, z.B. 17 Gew.%). Weiterhin enthält die Konverterschlacke regelmäßig MgO (z.B. 7 Gew.%), TiO₂ (z.B. 0,8 Gew.%), und ggf. Spuren von MnO, P₂O₅, SO₃, Na₂O, K₂O, und Cr₂O₃.

Kernpunkt der Erfindung bildet nun die Maßnahme, einen Teil der natürlichen Rohstoffe durch Konverterschlacke oder Elektrostahlwerkschlacke zu ersetzen. Hierdurch werden die natürlichen Rohstoffvorkommen geschont. Vorteilhaft ist ferner, dass aufgrund der thermischen Prozesse im Konverter das im Kalkstein vorhandene Kohlendioxid bereits verbrannt ist, so dass in der Konverterschlacke der Calciumanteil als Calciumoxid vorliegt. Folglich wird der Kohlendioxidausstoß beim Brennen des Zementklinkers deutlich reduziert, da während des Brennprozesses erheblich weniger Calciumcarbonat CaCO₃ zu Calciumoxid CaO unter Freisetzung von CO₂ umgewandelt werden muss.

Vorteilhafterweise wird dem Rohstoffgemisch Konverterschlacke in einem Anteil bis zu 30 Gew.-% zugemischt (Anspruch 2), besonders bevorzugt bis zu 20 Gew.%. In der Praxis wird ein Anteil von Konverterschlacke im Rohstoffgemisch von 2 Gew.-% bis 15 Gew.-%, insbesondere 5 Gew.-% bis 10 Gew.-%, als besonders vorteilhaft angesehen, wie dies Anspruch 3 vorsieht. Der Gehalt der Kalkkomponente beträgt vorzugsweise bis zu 70 Gew.%, besonders bevorzugt bis zu 60 Gew.%. Der Rest besteht vorzugsweise aus den weiteren Inhaltsstoffen, die unten näher beschrieben werden.

Das erfindungsgemäße Rohstoffgemisch enthält vorzugsweise weniger als 50 Gew.%, besonders bevorzugt weniger als 30 Gew.%, besonders bevorzugt weniger als 15 Gew.% CaCO₃.

Als Kalkkomponente können herkömmliche Kalkkomponenten verwendet werden, in erster Linie Kalkstein oder Kreide. In einer besonders bevorzugten Ausführungsform enthält die Kalkkomponente Hochofenschlacke oder Hüttensand. Hüttensand besteht aus ca. 30-45 % CaO, 30-45 % SiO₂, 5-15 % Al₂O₃, 4-17 % MgO, 0,5-1 % S und Spuren anderer Elemente. Die Zusammensetzung variiert in Abhängigkeit von den Einsatzstoffen des Hochofens. Seine Reindichte beträgt etwa 2,9 g/cm³. In einer besonders bevorzugten Ausführungsform besteht die Kalkkomponente aus Hüttensand.

Weiterhin ist es besonders bevorzugt, dass das Rohstoffgemisch durch Mischen von lediglich Konverterschlacke und Hüttensand erhalten wird.

Dem Rohstoffgemisch können neben der Kalkkomponente und der Konverterschlacke und/oder Elektrostahlwerkschlacke weitere Inhaltsstoffe zur Einstellung eines geeignetes Verhältnisses Ca:Si:Fe:Al beigemischt werden, insbesondere in Abhängigkeit der verwendeten Kalkkomponente. So können weiterhin eine Eisenkomponente (z.B. Eisenerz), eine Aluminiumkomponente (z.B. Bauxit) und/oder eine Siliciumkomponente (z.B. Sand) hinzugefügt werden. Alternativ können andere Abfallprodukte zum Einsatz kommen, wie z.B. Abfallprodukte aus der Stahl- oder Aluminiumindustrie (z.B. Stahlschlacke) oder Flugasche. Der Gehalt dieser weiteren Inhaltsstoffe beträgt jedoch in der Regel nicht mehr als 20 Gew.%, vorzugsweise nicht mehr als 10 Gew.%, bezogen auf das Gesamtgewicht des Rohstoffgemisches.

Bei der Zementklinkerherstellung werden die Rohstoffe für den Zementklinker in der Regel zunächst miteinander gemischt und dann in der sogenannten Rohmühle gemahlen. Das so entstehende Rohmehl wird dann in einem Ofen (z.B. Drehrohrofen) bei Temperaturen von 1400 bis 1600°C zu dem Klinker gebrannt. Vor dem Brennen erfolgt regelmäßig eine Vorkalzinierung bzw. Entsäuerung, z.B. in sogenannten Zyklonvorwärmern.

Das erfindungsgemäße Rohstoffgemisch kann wie die herkömmlichen Rohstoffgemische in einem solchen Verfahren verwendet werden, also der Rohmühle zusammen mit den anderen Komponente zugeführt werden. Alternativ ist es jedoch auch möglich, die Konverterschlacke und/oder Elektrostahlwerkschlacke erst in einem späteren Verfahrensschritt zu den restlichen Komponenten hinzuzugeben, z.B. nach der Mahlung in der Rohmühle und vor der Vorkalzinierung, oder nach der Vorkalzinierung und vor dem Brennen.

Die Erfindung betrifft ferner die Verwendung von Konverterschlacke und/oder Elektrostahlwerkschlacke in der Zementherstellung sowie einen Zementklinker, der durch das erfindungsgemäße Verfahren erhältlich ist. Von der Erfindung umfasst ist ferner ein Zement, der mit dem erfindungsgemäßen Zementklinker hergestellt wird.

Vorteilhafterweise ist die dem Rohstoffgemisch, dem Zementklinker und dem Zement zuzusetzende Konverterschlacke auf eine Körnung kleiner als 15 mm gebrochen. Besonders bevrzugt weist die Konverterschlacke eine Körnung von weniger als 1 mm auf.

## Patentansprüche

1. Rohstoffgemisch zur Herstellung eines Zementklinkers, umfassend eine Kalkkomponente und Konverterschlacke und/oder Elektrostahlwerkschlacke.

2. Rohstoffgemisch nach Anspruch 1, **dadurch gekennzeichnet, dass** Konverterschlacke in einem Anteil von bis zu 30 Gew.-% zugemischt wird.

3. Rohstoffgemisch nach Anspruch 1 oder 2, **dadurch gekennzeichnet, dass** Konverterschlacke in einem Anteil von 5 Gew.-% bis 10 Gew.-% zugemischt wird.

4. Rohstoffgemisch nach einem der vorhergehenden Ansprüche, **dadurch gekennzeichnet, dass** es weniger als 50 Gew.-% CaCO₃ enthält.

5. Rohstoffgemisch nach einem der vorhergehenden Ansprüche, **dadurch gekennzeichnet, dass** die Kalkkomponente Hochofenschlacke bzw. Hüttensand enthält.

6. Rohstoffgemisch nach einem der vorhergehenden Ansprüche, **dadurch gekennzeichnet, dass** der Rohstoffmischung eine weitere Aluminiumkomponente, Siliziumkomponente, und/oder Eisenkomponente hinzugemischt werden.

7. Verwendung von Konverterschlacke oder Elektrostahlwerkschlacke zur Zementherstellung.

8. Verfahren zur Herstellung von Zementklinker, umfassend die Schritte:
(A) Mischen von Konverterschlacke und/oder Elektrostahlwerkschlacke mit einer Kalkkomponente und ggf. weiteren Inhaltstoffen;
(B) Brennen der so erhaltenen Mischung.

9. Verfahren nach Anspruch 8, wobei Schritt (A) nach vorhergehendem Mahlen der Kalkkomponente und der ggf. weiteren Inhaltstoffe erfolgt.

10. Verfahren nach Anspruch 8, wobei vor dem Brennen eine Vorkalzinierung stattfindet, und Schritt (A) nach der Vorkalzinierung durchgeführt wird.

11. Zementklinker, erhältlich nach einem Verfahren nach Anspruch 8 bis 10.
